# EUROPEAN PATENT APPLICATION

(11) **EP 4 294 093 A1**
(43) Date of publication of application: **20.12.2023**
(21) Application number: 21928456.9
(22) Date of filing: 02.03.2021
(51) Int. Cl.: H04W 64/00, H04W 60/04

(54) **POSITIONING METHOD AND APPARATUS**

(71) Applicant: Huawei Technologies Co., Ltd., Shenzhen, Guangdong 518129 (CN)
(72) Inventor: ZHOU, Runze, Shenzhen, Guangdong 518129 (CN)
(74) Representative: Maiwald GmbH
(86) International application number: PCT/CN2021/078664
(87) International publication number: WO 2022/183365

(57) **Abstract**

This application provides a positioning method and an apparatus. The method includes: A location management network element obtains first information, where the first information is provided by an application entity, the first information includes a first identifier of a terminal device, and no network access capability is configured for the terminal device. The location management network element sends second information to an access network device, where the second information is used to establish a context of the terminal device, the second information includes a second identifier of the terminal device, and the second identifier is determined based on the first identifier. The location management network element receives fourth information sent by the access network device, where the fourth information is determined by the access network device based on third information sent by the terminal device, and the third information includes the second identifier. The location management network element determines a location of the terminal device based on the fourth information. In the foregoing method, functions such as realtime tracking, historical tracing, and restricted area alarm reporting can be implemented for a terminal device for which no network access capability is configured.

## Description

### TECHNICAL FIELD

Embodiments of this application relate to the field of communication technologies, and more specifically, to a method for positioning a terminal device, and an apparatus.

### BACKGROUND

In recent years, with the rapid development of an internet of things (Internet of Things, IoT) technology, many types of terminal devices have emerged. In an actual working scenario, location information of these terminal devices often needs to be obtained.

To prolong a battery lifespan of the terminal device, a possible approach is to retain a positioning capability of the terminal device, without configuring a capability of communicating with a network for the terminal device, for example, without configuring a network access capability for the terminal device. In this scenario, how to position such a terminal device is an urgent problem to be resolved.

### SUMMARY

This application provides a positioning method and an apparatus. According to the method and the apparatus, a terminal device for which no network access capability is configured can be positioned.

According to a first aspect, a positioning method is provided. The method includes: A location management network element obtains first information, where the first information is provided by an application entity, the first information includes information about a first identifier corresponding to a terminal device, and the terminal device does not support a network access capability. The location management network element sends second information to an access network device, where the second information is used to establish a context of the terminal device, the second information includes information about a second identifier corresponding to the terminal device, and the second identifier is determined based on the first identifier. The location management network element receives fourth information sent by the access network device, where the fourth information is determined by the access network device based on third information sent by the terminal device, and the third information includes the information about the second identifier. The location management network element determines a location of the terminal device based on the fourth information.

According to the solution of this application, for a terminal device for which no network access capability is configured, the location management network element may configure an identifier of the terminal device for the access network device based on information about the terminal device provided by the application entity, and the access network device establishes the context of the terminal device based on configuration made by the core network netwrok element. Although the terminal device does not access a network, the access network device determines, by using configuration made by the location management network element, that information including an identifier of a corresponding terminal device needs to be processed, so that the location management network element implements positioning of such a terminal device.

With reference to the first aspect, in some implementations of the first aspect, the fourth information includes signal strength information of a radio wave signal used to carry the third information; or the fourth information includes information about a time at which the access network device receives the third information.

With reference to the first aspect, in some implementations of the first aspect, the first information further includes information about a first location and information about a first parameter of the terminal device, the first identifier and the first parameter are used to determine the second identifier, and the method further includes: The location management network element selects the access network device, where the first location is within a service area of the access network device.

With reference to the first aspect, in some implementations of the first aspect, the second information further includes routing information of the location management network element.

With reference to the first aspect, in some implementations of the first aspect, the terminal device is a device for which no non-access stratum NAS protocol is configured and/or no radio resource control RRC protocol is configured.

According to a second aspect, a positioning method is provided. The method includes: An access network device receives second information from a location management network element, where the second information is used to establish a context of a terminal device, the second information includes information about a second identifier corresponding to the terminal device, the second identifier is determined by the location management network element based on a first identifier corresponding to the terminal device, information about the first identifier is included in first information provided by an application entity, and the terminal device does not support a network access capability. The access network device receives third information from the terminal device, where the third information includes the information about the second identifier. The access network device sends fourth information to the location management network element, where the fourth information is used to position the terminal device, and the fourth information is determined based on the third information.

According to the solution of this application, for a terminal device for which no network access capability is configured, when an identifier of the terminal device in the third information received by the access network device corresponds to an identifier of the terminal device in the second information, the fourth information is sent, so as to implement positioning of the terminal device.

With reference to the second aspect, in some implementations of the second aspect, the fourth information includes signal strength information of a radio wave signal used to carry the third information; or the fourth information includes information about a time at which the access network device receives the third information.

With reference to the second aspect, in some implementations of the second aspect, the second information further includes routing information of the location management network element.

With reference to the second aspect, in some implementations of the second aspect, the terminal device is a device for which no NAS protocol is configured and/or no RRC protocol is configured.

According to a third aspect, a positioning method is provided. The method includes: A terminal device obtains third information, where the third information includes information about a second identifier corresponding to the terminal device, the second identifier corresponds to a second identifier in second information received by an access network device from a location management network element, the second identifier in the second information is determined by the location management network element based on a first identifier, information about the first identifier is included in first information provided by an application entity, and the terminal device does not support a network access capability. The terminal device sends the third information.

According to the solution of this application, for a terminal device for which no network access capability is configured, the terminal device may send the third information. The second identifier of the terminal device included in the third information corresponds to the second identifier in the second information received by the access network device from the location management network element. The access network device may determine, based on the third information, that the terminal device is a terminal device that needs to be positioned, so as to implement positioning of the terminal device.

With reference to the third aspect, in some implementations of the third aspect, the terminal device is a device for which no NAS protocol is configured and/or no RRC protocol is configured.

According to a fourth aspect, a positioning method is provided. The method includes: A data storage management network element obtains first information, where the first information is provided by an application entity, the first information includes information about a first identifier corresponding to a terminal device, and the terminal device does not support a network access capability. The data storage management network element sends the first information to a first mobility management network element.

According to the solution of this application, for a terminal device for which no network access capability is configured, the data storage management network element obtains the first information from the application entity, and sends the first information to the mobility management network element, so that the mobility management network element can obtain context information of the terminal device, so as to implement positioning of the terminal device.

With reference to the fourth aspect, in some implementations of the fourth aspect, the first information further includes information about a first location of the terminal device, and the method further includes: The data storage management network element selects the first mobility management network element, where the first location is within a service area of the first mobility management network element.

With reference to the fourth aspect, in some implementations of the fourth aspect, the first information further includes information about a positioning capability and information about a first parameter of the terminal device.

With reference to the fourth aspect, in some implementations of the fourth aspect, the data storage management network element sends a first request message to the application entity, where the first request message is used to request the application entity to send information about a second location when the second location of the terminal device is outside the service area of the first mobility management device. The data storage management network element receives the information about the second location. The data storage management network element selects a second mobility management network element, where the second location is within a service area of the second mobility management network element.

According to the solution in this application, when the terminal device moves out of the service area of the first mobility management network element, the second mobility management network element may be selected in time, so that the second mobility management network element serves as a serving device for positioning the terminal device.

With reference to the fourth aspect, in some implementations of the fourth aspect, the terminal device is a device for which no NAS protocol is configured and/or no RRC protocol is configured.

According to a fifth aspect, a positioning method is provided. The method includes: An application entity obtains first information, where the first information includes information about a first identifier corresponding to a terminal device, and the terminal device does not support a network access capability. The application entity sends the first information to a data storage management network element.

According to the solution of this application, for a terminal device for which no network access capability is configured, the application entity may obtain the first information of the terminal device, and send the first information to a core network netwrok element. This is equivalent to that the application entity takes the place of the terminal device to access a network. The core network netwrok element configures an access network device based on the first information, to implement positioning of the terminal device.

With reference to the fifth aspect, in some implementations of the fifth aspect, the first information further includes information about a first location information about a positioning capability, and information about a first parameter of the terminal device.

With reference to the fifth aspect, in some implementations of the fifth aspect, the method further includes: The application entity receives a first request message, where the first request message is used to request the application entity to send information about a second location when the second location of the terminal device is outside a service area of a first mobility management network element, and the first request message includes information about the service area of the first mobility management network element. The application entity determines that the second location is outside the service area of the first mobility management network element. The application entity sends the information about the second location, where the information about the second location is used to select a second mobility management network element, and the second location is within a service area of the second mobility management network element.

With reference to the fifth aspect, in some implementations of the fifth aspect, the terminal device is a device for which no NAS protocol is configured and/or no RRC protocol is configured.

According to a sixth aspect, a positioning method is provided. The method includes: A mobility management network element receives first information, where the first information is provided by an application entity, the first information includes information about a first identifier corresponding to a terminal device, and the terminal device does not support a network access capability. The mobility management network element sends the first information to a location management network element.

According to the solution of this application, for a terminal device for which no network access capability is configured, the mobility management network element establishes context information of the terminal device based on the first information provided by the application entity, and sends the first information to the location management network element, so that the location management network element may implement positioning of the terminal device based on the first information.

With reference to the sixth aspect, in some implementations of the sixth aspect, the first information further includes information about a first location, information about a positioning capability, and information about a first parameter of the terminal device, and the method further includes: The mobility management network element selects the location management network element based on the first location and the positioning capability.

With reference to the sixth aspect, in some implementations of the sixth aspect, the terminal device is a device for which no NAS protocol is configured and/or no RRC protocol is configured.

According to a seventh aspect, a location management network element is provided, and the location management network element includes a unit configured to perform the method in the first aspect or various implementations of the first aspect.

According to an eighth aspect, an access network device is provided. The access network device includes a unit configured to perform the method in the second aspect or various implementations of the second aspect.

According to a ninth aspect, a terminal device is provided. The terminal device includes a unit configured to perform the method in the third aspect or various implementations of the third aspect.

According to a tenth aspect, a data storage management network element is provided. The data storage management network element includes a unit configured to perform the method in the fourth aspect or various implementations of the fourth aspect.

According to an eleventh aspect, an application entity is provided. The application entity includes a unit configured to perform the method in the fifth aspect or various implementations of the fifth aspect.

According to a twelfth aspect, a mobility management network element is provided. The mobility management network element includes a unit configured to perform the method in the sixth aspect or various implementations of the sixth aspect.

According to a thirteenth aspect, a computer readable medium is provided. The computer readable medium stores a computer program (which may also be referred to as code or instructions). When the computer program is run on a computer, the computer is enabled to perform the method in any one of the possible implementations of the first aspect to the sixth aspect.

According to a fourteenth aspect, a computer program product is provided. The computer program product includes computer program code. When the computer program code is run on a computer, the computer is enabled to perform the method in any one of the possible implementations of the first aspect to the sixth aspect.

According to a fifteenth aspect, a communication system is provided. The communication system includes a core network netwrok element and an access network device. The core network netwrok element is configured to perform the method in any one of the possible implementations of the first aspect, the fourth aspect, or the sixth aspect. The access network device is configured to perform the method in any one of the possible implementations of the second aspect.

According to a sixteenth aspect, a chip is provided. A processing circuit is disposed on the chip, and the processing circuit is configured to perform the method in any one of the possible implementations of the first aspect to the sixth aspect.

### BRIEF DESCRIPTION OF DRAWINGS

FIG. 1 shows an architecture of a communication system to which embodiments of this application are applicable;
FIG. 2 is a diagram of a positioning service architecture applicable to this application;
FIG. 3 is a schematic interaction diagram of an example of a positioning method in this application;
FIG. 4A and FIG. 4B are a schematic interaction diagram of another example of a positioning method in this application;
FIG. 5 is a schematic interaction diagram of another example of a positioning method in this application;
FIG. 6 is a schematic block diagram of a communication device according to this application;
FIG. 7 is a schematic block diagram of a communication apparatus according to this application; and
FIG. 8 is a schematic block diagram of an access network device apparatus according to this application.

### DESCRIPTION OF EMBODIMENTS

The following describes technical solutions in this application with reference to the accompanying drawings. Apparently, the described embodiments are some rather than all of the embodiments of this application. All other embodiments obtained by a person of ordinary skill in the art based on embodiments of this application without creative efforts shall fall within the protection scope of this application.

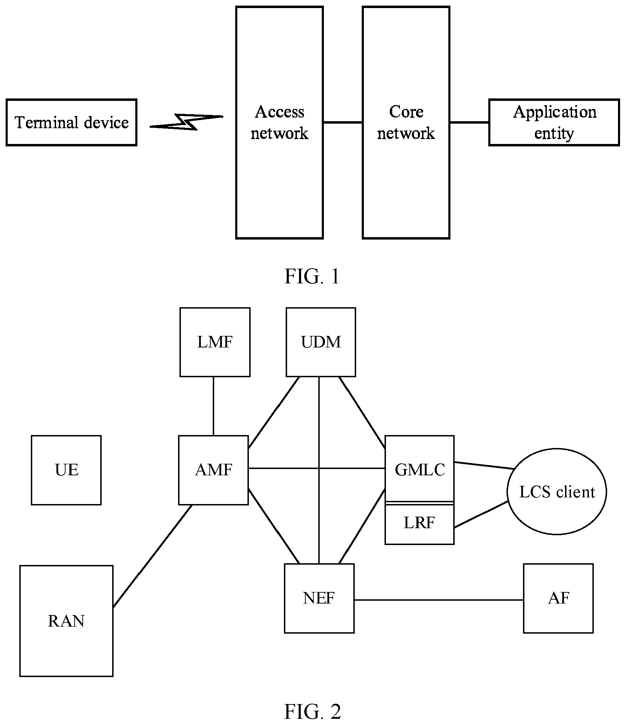

The technical solutions provided in this application may be applied to a communication system that can implement communication by using an access network and a core network, as shown in FIG. 1.

In embodiments of this application, the access network includes an access network device, and the access network device is a device that provides a wireless communication function for a terminal device. For example, the access network device may be an access point (access point, AP) in a WLAN, a base transceiver station (base transceiver station, BTS) in a GSM or CDMA, a NodeB (NodeB, NB) in WCDMA, a gNB in a new radio (new radio, NR) system, or an evolved NodeB (evolved NodeB, eNB or eNodeB) in LTE. In a 5G network, the access network device may be further a radio access network (radio access network, RAN) device.

In embodiments of this application, the core network may include but is not limited to a data storage management network element, a mobility management network element, a location management network element, and a network exposure network element. The data storage management network element is a network element configured to store and manage data of the terminal device. For example, in a 5G network, the data storage management network element may be a unified data management (unified data management, UDM) function network element. In a future communication system, the unified data management function network element may still be the UDM network element, or may further have another name. This is not limited in this application. The mobility management network element is a network element configured to manage mobility of the terminal device. For example, in a 4G network, the mobility management network element may be a mobility management entity (mobility management entity, MME), and in a 5G network, may be an access and mobility management function (access and mobility management function, AMF) network element. In a future communication system, the access and mobility management function network element may still be an AMF network element, or may further have another name. This is not limited in this application. The location management network element is a network element configured to manage a location of the terminal device. For example, in a 5G network, the location management network element may be a location management function (location management function, LMF) network element. In a future communication system, the location management function network element may still be an LMF network element, or may further have another name. This is not limited in this application. The network exposure network element is responsible for providing a network function for a thirdparty application. For example, in a 5G network, the network exposure network element may be a network exposure function (network exposure function, NEF) network element. In a future communication system, the network exposure function network element may still be a NEF network element, or may further have another name. This is not limited in this application.

It should be understood that, in actual deployment or in a future communication system, several core network netwrok elements in the foregoing core network netwrok elements may be integrated, or a function of one core network netwrok element is jointly implemented by several network elements. When several core network netwrok elements are integrated, interaction between these core network netwrok elements in this application is an internal operation or may be omitted.

In an embodiment of this application, an application entity is configured to request a specific capability from a network, and is an application for accessing a network, for example, may be an application function (application function, AF) network element.

In embodiments of this application, the terminal device may be a common terminal device, or a terminal device (briefly referred to as a positioning terminal) that is dedicatedly used for positioning and that has extremely low power consumption and a very simple function. In order to reduce power consumption of the positioning terminal and prolong a battery lifespan of the positioning terminal, no network access capability is configured for the positioning terminal. In a possible implementation, no non-access stratum (non-access stratum, NAS) protocol is configured and/or no radio resource control (radio resource control, RRC) protocol is configured for the positioning terminal. Optionally, no LPP stratum protocol is configured for the positioning terminal. Therefore, the positioning terminal cannot communicate with the core network netwrok element, and the core network netwrok element cannot create a context of the positioning terminal, and cannot configure related information of the positioning terminal for the RAN. Therefore, how to position such a terminal device is an urgent problem to be resolved.

FIG. 2 is a diagram of a positioning service architecture applicable to a technical solution proposed in this application. The positioning service architecture further includes a gateway mobile location center (gateway mobile location center, GMI,C), a location client (LCS client), and a location retrieval function (location retrieval function, LRF) network element. The GMLC is configured to receive a positioning request from the LCS client, and transfer the positioning request to the AMF. The LRF is responsible for retrieving or verifying location information.

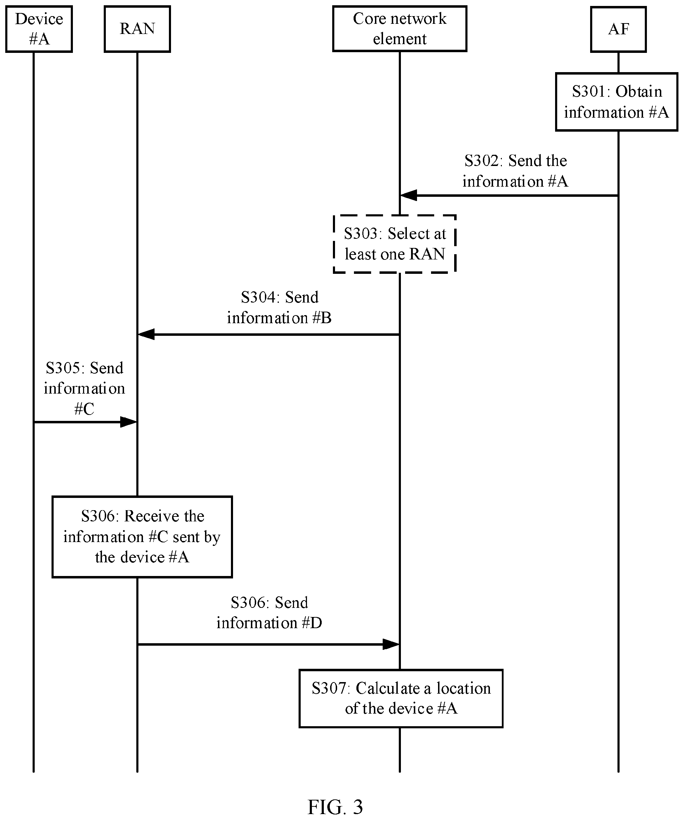

FIG. 3 is a schematic flowchart of an example of a positioning method proposed in this application. The method may be applied to the communication system shown in FIG. 1, or may be applied to the positioning service architecture shown in FIG. 2. The method includes the following steps.

S301: An AF (an example of an application entity) obtains information #A (an example of first information) of a device #A (an example of a terminal device).

In a possible implementation, content in the information #A may be configured on the AF. For example, the information #A may be configured on the AF before the device #Ais powered on; or the information #A may be configured on the AF after the device #A is powered on. The information #A includes information about a first identifier corresponding to the device #A. For example, the first identifier may be a permanent identifier of the device #A.

S302: The AF sends the information #A to a core network netwrok element. Correspondingly, the core network netwrok element receives the information #A.

For example, the AF may send the information #A to an LMF network element in the core network netwrok element, and correspondingly, the LMF network element receives the information #A. The AF may directly send the information #A to the LMF network element, or the AF may send the information #A to the LMF network element through another network element. For example, the AF sends the information #A to the LMF network element through an AMF network element.

Optionally, the method may further include S303: The core network netwrok element selects at least one RAN (an example of an access network device).

For example, the information #A further includes information about a first location corresponding to the device #A. The core network netwrok element may select a RAN based on the information about the first location in the information #A, for example, a network location identifier of the device #A or geographic location coordinates of the device #A. The first location is within a service area of the selected RAN.

S304: The core network netwrok element sends information #B (an example of second information) to the at least one RAN, where the information #B is used to establish context information of the device #A. The information #B includes information about an identifier of the device #A. Correspondingly, the RAN receives the information #B.

For example, when a positioning technology based on a triangle relationship is used for positioning of the device #A, the information #B may be sent to three RANs.

The following describes two cases of identification information of the device #A included in the information #B.

### Case 1:

The information #B includes the information about the first identifier corresponding to the device #A.

### Case 2:

The information #A may further include information about a first parameter of the device #A, and the first parameter is used to obtain a second identifier of the device #A. For example, the first parameter may be key information corresponding to the device #A. The method may further include: The core network netwrok element obtains a second identifier corresponding to the device #A. For example, the second identifier corresponding to the device #A may be a temporary identifier corresponding to the device #A, and the information #B includes the information about the second identifier corresponding to the device #A.

For example, the core network netwrok element may generate, based on the first parameter, the first identifier, and a first variable corresponding to the device #A, the second identifier corresponding to the device #A. A value of the first variable may be locally determined by the core network netwrok element, and the value of the first variable is related to a quantity of times for obtaining the second identifier corresponding to the device #A. For example, when the second identifier corresponding to the device #A is generated for the first time, the value of the first variable may be 1; when the second identifier corresponding to the device #A is generated for the second time, the value of the first variable may be 2; and so on.

It should be understood that different second identifiers may be obtained by using different values of the first variable. A plurality of pieces of information #B include different second identifiers. This can avoid leakage of the first identifier corresponding to the device #A when compared with a case in which the plurality of pieces of information #B include a same first identifier, thereby improving security.

Optionally, the information #B further includes routing information of the core network netwrok element, for example, routing information of the LMF network element. To be specific, the core network netwrok element configures, for the RAN, a correspondence between the identification information of the device #A and the routing information of the core network netwrok element.

S305: The device #A sends information #C (an example of third information), where the information #C includes the identification information corresponding to the device #A.

In a possible manner, the device #A may send the information #C in a broadcast manner.

The following describes two cases of the identification information corresponding to the device #A and included in the information #C.

### Case 3:

Corresponding to case 1 in S304, the identification information corresponding to the device #A in the information #C is the information about the first identifier corresponding to the device #A.

### Case 4:

Corresponding to case 2 in S304, the identification information corresponding to the device #A in the information #C is the information about the second identifier corresponding to the device #A. It should be understood that a manner in which the device #A obtains the second identifier is the same as a manner in which the core network netwrok element obtains the second identifier corresponding to the device #A. For example, the device #A may generate, based on the first parameter, the first identifier, and the first variable corresponding to the device #A, the second identifier corresponding to the device #A. A value of the first variable is locally determined by the device #A, and the first parameter and the first identifier corresponding to the device #A are preconfigured in the device #A.

It should be understood that the device #A may obtain, by using different values of the first variable, different second identifiers corresponding to the device #A. A plurality of pieces of information #C include different second identifiers. This avoids leakage of the first identifier corresponding to the device #A when compared with a case in which the plurality of pieces of information #C include a same first identifier, thereby improving security.

S306: The RAN receives the information #C sent by the device #A, and sends information #D (an example of the fourth information) to the core network netwrok element. Correspondingly, the core network netwrok element receives the information #D.

In a possible implementation, the information #D includes signal strength information of a radio wave signal that is received by the RAN and that is used to carry the information #C. It should be understood that the RAN has a capability of detecting signal strength.

In another possible implementation, the information #D includes information about a time at which the RAN receives the information #C.

It should be understood that the RAN may receive information sent by a plurality of terminal devices. Information sent by each terminal device includes identification information corresponding to the terminal device. The RAN sends the information #D to the core network netwrok element only when the RAN receives the information #C sent by the device #A.

The RAN may determine whether identification information corresponding to the terminal device in the received information corresponds to the identification information of the device #A in the information #B.

When the identification information corresponding to the terminal device in the received information corresponds to the identification information of the device #A in the information #B, the RAN sends the information #D.

For example, if the RAN receives the information #C, the information #C includes the first identifier of the device #A, and the information #B also includes the first identifier of the device #A, the RAN sends the information #D; or if the second identifier of the device #A included in the information #C is the same as the second identifier of the device #A included in the information #B, the RAN sends the information #D. Optionally, the RAN may determine, based on the identification information of the device #A in the information #C, routing information of a core network netwrok element corresponding to the device #A, for example, routing information of an LMF network element, and send the information #D to the core network netwrok element based on the routing information.

When the identification information corresponding to the terminal device in the received information does not correspond to the identification information of the device #A in the information #B, the RAN may skip processing the received information.

For example, if the information received by the RAN includes identification information corresponding to a device #B, and the RAN does not receive the information #B that includes an identifier of the device #B, the RAN may skip processing the received information. It should be understood that the device #B may be any terminal device other than the device #A.

It should be understood that there may be at least one RAN that receives the information #C sent by the device #A, and sends the information #D to the core network netwrok element. The at least one RAN is the same as the at least one RAN in S304.

S307: The core network netwrok element calculates location information of the device #A based on the received information #D.

In a possible implementation, the location information of the device #A may be calculated by the LMF network element in the core network netwrok element.

For example, when a positioning technology based on a triangle relationship is used to position the device #A, three RANs may separately send the information #D to the LMF, and the information #D sent by each RAN includes information about a time at which the RAN receives the information #C. The LMF may calculate the location information of the device #A based on the received three pieces of information #D. It should be understood that, in this case, clocks of the three RANs should meet specific synchronization precision.

It should be understood that the steps related to the core network netwrok element in the foregoing method may be performed by one core network netwrok element, for example, may be performed by an LMF, or may be performed by a plurality of core network netwrok elements in cooperation with each other, for example, may be performed by a UDM, an AMF, and an LMF, or may be performed by an AMF and an LMF. A specific entity apparatus of the core network netwrok element is not limited in this application.

According to the solution of this application, for a terminal device for which no network access capability is configured, the core network netwrok element may configure an identifier of the terminal device for the access network device based on information about the terminal device provided by the application entity, and the access network device establishes the context of the terminal device based on configuration made by the core network netwrok element. Although the terminal device does not access a network, the access network device determines, by using configuration made by the core network netwrok element, that information including an identifier of a corresponding terminal device needs to be processed, so that the core network netwrok element implements positioning of such a terminal device.

The following describes in detail the method shown in FIG. 3 by using an example in which the core network netwrok element in FIG. 3 includes a UDM, an AMF, and an LMF.

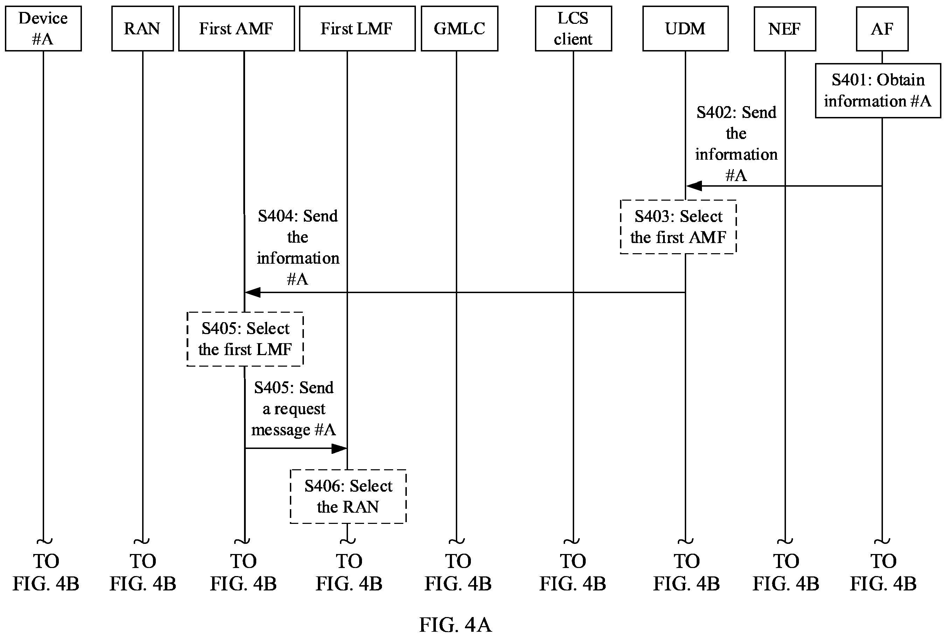

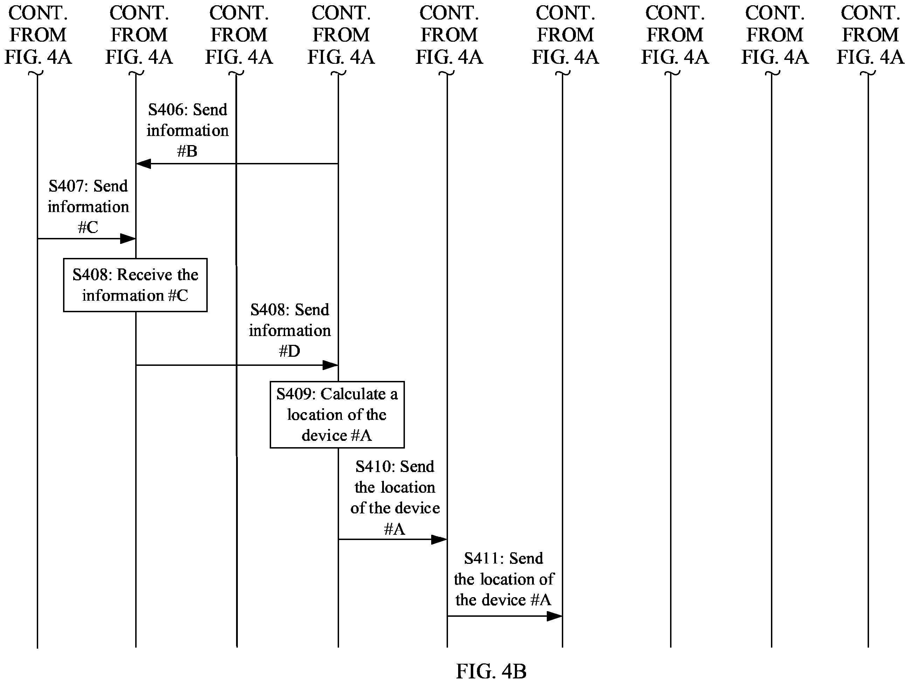

FIG. 4A and FIG. 4B are a schematic flowchart of an example of a positioning method proposed in this application. The method may be applied to the positioning service architecture shown in FIG. 2.

S401: An AF obtains information #A of a device #A.

The information #A includes information about a first identifier corresponding to the device #A. Optionally, the information #A may further include information about a positioning capability, information about a first location, and information about a first parameter of the device #A.

The information about the positioning capability and the information about the first location of the device #A are used to select a core network netwrok element, and the information about the first parameter of the device #A is used to obtain a second identifier corresponding to the device #A.

S402: The AF sends the information #Ato a UDM. Correspondingly, the UDM receives the information #A.

For example, the AF may send the information #A to the UDM through the NEF, or the AF may directly send the information #Ato the UDM. This is not limited in this application.

(Optionally) S403: The UDM selects a first AMF (an example of a first mobility management network element).

In a possible implementation, the UDM may select the first AMF based on the information about the first location of the device #A in the information #A, for example, a geographic location #1 of the device #A, where the first location is within a service area of the first AMF.

S404: The UDM sends the information #A to the first AMF, and correspondingly, the first AMF receives the information #A.

S405: The first AMF sends a request message #A to a first LMF. The request message #A is used to indicate the first LMF to position the device #A based on the information #A.

Optionally, the first AMF selects the first LMF based on the information #A. For example, the first AMF selects the first LMF based on the information about the first location and/or the information about the positioning capability of the device #A in the information #A. The device #A is within a service range of the first LMF.

In a possible implementation, the information #A may be included in the request message #A. In another possible implementation, the information #A may alternatively be included in another message. In other words, the AMF further sends another message to the LMF, and the message carries the information A. This is not limited in this application.

S406: The first LMF sends information #B to at least one RAN, where the information #B includes identification information corresponding to the device #A, and the information #B is used to establish a context of the device #A. Optionally, the information #B may further include routing information of the first LMF. Correspondingly, the RAN receives the information #B.

For example, when a positioning technology based on a triangle relationship is used to position the device #A, the information #B may be sent to three RANs.

In a possible implementation, the first LMF may select at least one RAN, and send the information #B to the selected RAN. The first LMF may select at least one RAN based on the information about the first location of the device #A included in the information #A, for example, selects at least one RAN based on a network location identifier of the device #A or the geographic location #1 of the device #A. The first location is within a service area of the selected RAN.

The following describes two cases of content included in the information #B.

### Case 1:

The information #B includes the information about the first identifier corresponding to the device #A.

### Case 2:

The information #B includes the information about the second identifier corresponding to the device #A.

In a possible implementation, the second identifier may be obtained by the first LMF based on the first parameter, the first identifier, and the first variable corresponding to the device #A. For a specific obtaining manner, refer to S304.

In another possible implementation, the second identifier may be obtained by the UDM or the first AMF based on the first parameter, the first identifier, and the first variable corresponding to the device #A. After obtaining the second identifier corresponding to the device #A, the UDM or the first AMF sends, to the first LMF, the second identifier corresponding to the device #A. For a manner in which the UDM or the first AMF obtains the second identifier corresponding to the device #A, refer to S304.

It should be understood that the manner in which the first LMF obtains the second identifier is not limited in this application.

S407 is the same as S305. For details, refer to the description of S305.

S408: The RAN receives information #C sent by the device #A, and sends information #D to the first LMF. Correspondingly, the first LMF receives the information #D.

For a specific process, refer to the description of S306. For an operation performed by the core network netwrok element in S306, the first LMF may take the place of the core network netwrok element in S408.

S409: The first LMF calculates the location information of the device #A based on the received information #D.

For a specific process, refer to S307.

S410: The first LMF sends the location information of the device #A to a GMLC.

S411: The GMLC sends the location information of the device #A to an LCS client.

According to the solution of this application, for a terminal device for which no network access capability is configured, the application entity may obtain context information of the terminal device. Through information transmission between core network netwrok elements, the LMF network element may obtain the identifier of the terminal device, to configure the identifier of the terminal device for the access network device. The access network device establishes a context of the terminal device based on configuration made by the core network netwrok element. Although the terminal device does not access a network, the access network device determines, by using configuration made by the LMF network element, that information including an identifier of a corresponding terminal device needs to be processed, so that the LMF network element implements positioning of such a terminal device.

When the core network netwrok element in FIG. 3 includes the AMF and the LMF, but does not include the UDM, in S402, the AF sends the information #A to the first AMF, and correspondingly, the first AMF receives the information #A. In this case, in the foregoing method, S403 and S404 may not be performed, and S405 to S411 are performed after S401 and S402.

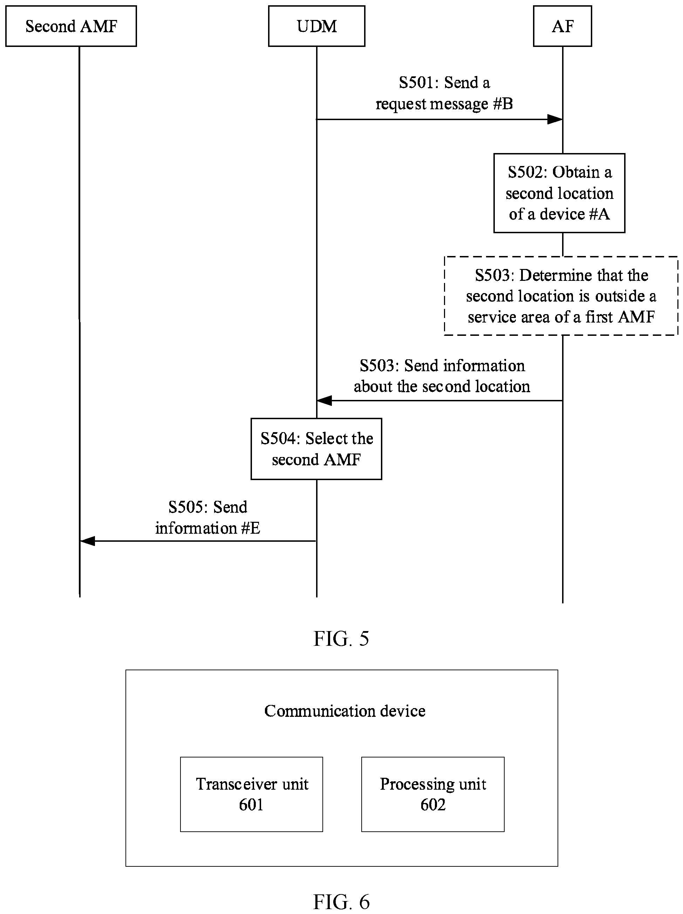

S401 to S411 in the foregoing method are specific to a scenario in which the location of the terminal device is within the service area of the first AMF. However, in practice, the location of the terminal device may move out of the service area of the first AMF. Therefore, this scenario needs to be considered when the terminal device is positioned. The following describes a method for positioning a terminal device in a scenario in which the terminal device may move out of a service area of a first AMF, as shown in FIG. 5. It should be understood that the method described below may be superposed based on S401 to S411 for use.

S501: AUDM sends a request message #B (an example of a first request message) to an AF, where the request message #B is used to subscribe to location information of a device #A.

Optionally, the request message #B includes information about a service area of a first AMF. The request message #B is used to request the AF to send information about a second location of the device #A to the UDM when the second location of the device #A (for example, a geographic location #2 of the device #A) is outside the service area of the first AMF.

The UDM may send the request message #B to the AF through a NEF, or the UDM may directly send the request message #B to the AF. A manner in which the UDM sends the request message #B to the AF is not limited in this application.

An execution sequence between S501 and S404 is not limited. For example, S501 may be performed when S404 is being performed, or may be performed after S404.

S502: The AF obtains information about a second location of the device #A.

For example, the information about the second location of the device #A may be configured on the AF, or the information about the second location of the device #A may be obtained by the AF from the device #A, or the information about the second location of the device #A may be obtained by the AF from another device (for example, a device management server).

S503: The AF sends the information about the second location of the device #A to the UDM. Correspondingly, the UDM receives the information about the second location of the device #A.

Optionally, if the AF determines that the second location of the device #A is outside the service area of the first AMF, the AF sends the information about the second location of the device #A to the UDM. For example, in the AF, if the geographic location #2 of the device #A is not within the service area of the first AMF, the AF sends the information about the second location of the device #A.

S504: The UDM selects a second AMF (an example of a second mobility management network element) based on the information about the second location of the device #A.

The second location of the device #A is within a service area of the second AMF.

S505: The UDM sends information #E to the second AMF, where the information #E includes information about a first identifier corresponding to the device #A. Optionally, the information #E may further include information about a positioning capability, the information about the second location, and information about a first parameter of the device #A.

Then, the second AMF performs the operations performed by the first AMF in S405 to S411, and a second LMF performs the operations performed by the second LMF in S405 to S411. That is, the second AMF takes the place of the first AMF in S405 to S411, and the second LMF takes the place of the first LMF in S405 to S411. The second LMF may be selected by the second AMF based on the information about the second location and/or the information about the positioning capability of the device #Ain the information #E. For a specific process, refer to steps S405 to S411. Details are not described herein again.

According to the solution in this application, when the terminal device moves outside the service area of the first AMF, the terminal device can be positioned by using the foregoing method.

According to the foregoing method, FIG. 6 shows a communication device provided in an embodiment of this application. The communication device includes a transceiver unit 601 and a processing unit 602. The transceiver unit 601 is configured to implement content exchange between the communication device and another unit or network element. The processing unit 602 is configured to implement data processing by the communication device. It should be understood that the transceiver unit 601 in this embodiment of this application may be implemented by a transceiver or a transceiver-related circuit component, and the processing unit 602 may be implemented by a processor or a processor-related circuit component (or referred to as a processing circuit).

For example, the communication device may be a communication apparatus device, or may be a chip applied to the communication apparatus device, or another combined device or component or the like that has a function of the communication apparatus device.

For example, when the communication device is an application entity, the transceiver unit 601 and the processing unit 602 can support actions implemented by the application entity or the AF in the foregoing method examples.

For example, when the communication device is a data storage management network element, the transceiver unit 601 and the processing unit 602 can support actions implemented by the data storage management network element or the UDM in the foregoing method examples.

For example, when the communication device is a mobility management network element, the transceiver unit 601 and the processing unit 602 can support actions implemented by the mobility management network element, the first AMF, or the second AMF in the foregoing method examples.

For example, when the communication device is a location management network element, the transceiver unit 601 and the processing unit 602 can support actions implemented by the location management network element, the first LMF, or the second LMF in the foregoing method examples.

For example, when the communication device is an access network device, the transceiver unit 601 and the processing unit 602 can support actions implemented by the access network device or the RAN in the foregoing method examples.

For example, when the communication device is a terminal device, the transceiver unit 601 and the processing unit 602 can support actions implemented by the terminal device in the foregoing method examples.

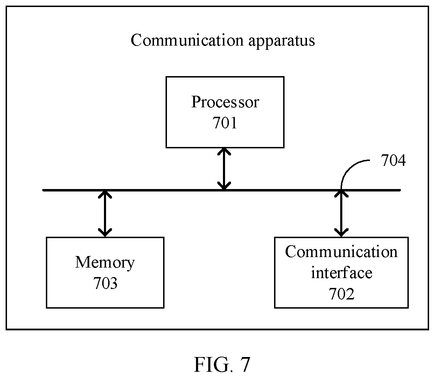

An embodiment of this application further provides a communication apparatus, including a processor 701, a communications interface 702, and a memory 703, as shown in FIG. 7. The processor 701, the communications interface 702, and the memory 703 may be connected to each other through a bus 704. The bus 704 may be a peripheral component interconnect (peripheral component interconnect, PCI) standard bus, an extended industry standard architecture (extended industry standard architecture, EISA) bus, or the like. The bus 704 may be classified into an address bus, a data bus, a control bus, and the like. For ease of representation, only one bold line is used for representation in FIG. 7, but this does not mean that there is only one bus or only one type of bus. The processor 701 may be a central processing unit (central processing unit, CPU), a network processor (network processor, NP), or a combination of the CPU and the NP. The processor may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable logic gate array (field-programmable gate array, FPGA), a generic array logic (generic array logic, GAL), or any combination thereof. The memory 703 may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), served as an external cache.

The processor 701 is configured to implement a data processing operation of the communication apparatus. The communications interface 702 is configured to implement receiving and sending operations of the communication apparatus.

For example, when the communication apparatus is an application entity, the processor 701, the communications interface 702, and the memory 703 can support actions implemented by the application entity or the AF in the foregoing method examples.

For example, when the communication apparatus is a data storage management network element, the processor 701, the communications interface 702, and the memory 703 can support actions implemented by the data storage management network element or the UDM in the foregoing method examples.

For example, when the communication apparatus is a mobility management network element, the processor 701, the communications interface 702, and the memory 703 can support actions implemented by the mobility management network element, the first AMF, or the second AMF in the foregoing method examples.

For example, when the communication apparatus is a location management network element, the processor 701, the communications interface 702, and the memory 703 can support actions implemented by the location management network element, the first LMF, or the second LMF in the foregoing method examples.

For example, when the communication apparatus is an access network device, the processor 701, the communications interface 702, and the memory 703 can support implemented by the access network device or the RAN in the foregoing method examples.

For example, when the communication apparatus is a terminal device, the processor 701, the communications interface 702, and the memory 703 can support actions implemented by the terminal device in the foregoing method examples.

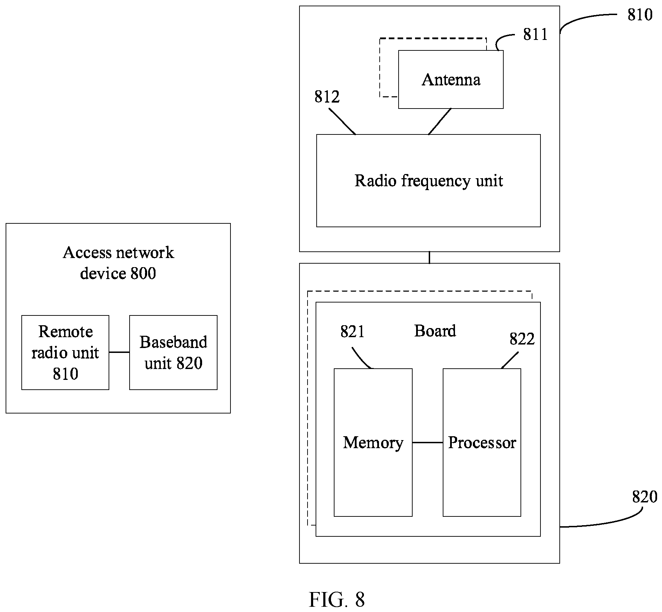

An embodiment of this application further provides an access network device, as shown in FIG. 8. The access network device 800 includes one or more radio frequency units such as a remote radio unit (remote radio unit, RRU) 810, and one or more baseband units (baseband unit, BBU) (which may also be referred to as a digital unit (digital unit, DU)) 820. The RRU 810 may be referred to as a transceiver module. The transceiver module may include a sending module and a receiving module, or the transceiver module may be a module that can implement sending and receiving functions. The transceiver module may correspond to the transceiver unit 610 in FIG. 6. Optionally, the transceiver module may also be referred to as a transceiver, a transceiver circuit, a transceiver device, or the like, and may include at least one antenna 811 and a radio frequency unit 812. The RRU 810 is mainly configured to: receive and send a radio frequency signal, and perform conversion between a radio frequency signal and a baseband signal, for example, configured to send indication information to a terminal device. The BBU 820 is mainly configured to perform baseband processing, control a base station, and so on. The RRU 810 and the BBU 820 may be physically disposed together, or may be physically disposed separately, that is, a distributed base station.

The BBU 820 is a control center of the base station, and may also be referred to as a processing module. The BBU 820 may correspond to the processing unit 620 in FIG. 6, and is mainly configured to implement a baseband processing function, for example, channel coding, multiplexing, modulation, or spreading. For example, the BBU (processing module) may be configured to control the base station to perform an operation procedure related to a network device in the foregoing method embodiments, for example, generate the foregoing indication information.

In an example, the BBU 820 may include one or more boards, and the plurality of boards may jointly support a radio access network (for example, an LTE network) of a single access standard, or may separately support radio access networks (for example, an LTE network, a 5G network, or another network) of different access standards. The BBU 820 further includes a memory 821 and a processor 822. The memory 821 is configured to store necessary instructions and necessary data. The processor 822 is configured to control the base station to perform a necessary action, for example, configured to control the base station to perform an operation procedure related to a network device in the foregoing method embodiments. The memory 821 and the processor 822 may serve one or more boards. In other words, a memory and a processor may be disposed on each board. Alternatively, a plurality of boards may share a same memory and a same processor. In addition, a necessary circuit may be further disposed on each board.

This application further provides a communication system. The communication system includes a core network netwrok element and an access network device. The core network netwrok element in the system may be the location management network element, or the mobility management network element, or the data storage management network element in the foregoing method. The communication system may be configured to implement the foregoing method.

This application further provides a computer readable medium. The computer readable medium stores a computer program (also referred to as code or instructions). When the computer program is run on a computer, the computer is enabled to perform the foregoing method.

This application further provides a computer program product. The computer program product includes computer program code. When the computer program code is run by a computer, the computer is enabled to perform the foregoing method.

This application further provides a chip. A processing circuit is disposed on the chip, and the processing circuit is configured to perform the foregoing method.

The terms such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or a remote process and based on a signal having one or more data packets (for example, data from two components interacting with another component in a local system, a distributed system, and/or across a network such as an Internet interacting with other systems by using the signal).

A person of ordinary skill in the art may be aware that, in combination with the examples described in embodiments disclosed in this specification, units and algorithm steps may be implemented by an electronic hardware or a combination of a computer software and an electronic hardware. Whether the functions are performed by hardware or software depends on particular applications and design constraint conditions of the technical solutions. A skilled person may use different methods for each particular application to implement the described functions, but this implementation should not be considered as beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separate, and components displayed as units may or may not be physical units, that is, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions in this application essentially, or the part contributing to the conventional technology, or some of the technical solutions may be embodied in a form of a software product. The computer software product is stored in a storage medium, and includes several instructions for enabling a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A positioning method, comprising:
obtaining, by a location management network element, first information, wherein the first information is provided by an application entity, the first information comprises information about a first identifier corresponding to a terminal device, and the terminal device does not support a network access capability;
sending, by the location management network element, second information to an access network device, wherein the second information is used to establish a context of the terminal device, the second information comprises information about a second identifier corresponding to the terminal device, and the second identifier is determined based on the first identifier;
receiving, by the location management network element, fourth information sent by the access network device, wherein the fourth information is determined by the access network device based on third information sent by the terminal device, and the third information comprises the information about the second identifier; and
determining, by the location management network element, a location of the terminal device based on the fourth information.

2. The method according to claim 1, wherein
the first information further comprises information about a first location and information about a first parameter of the terminal device, the first identifier and the first parameter are used to determine the second identifier, and the method further comprises:
selecting, by the location management network element, the access network device, wherein the first location is within a service area of the access network device.

3. The method according to claim 1 or 2, wherein
the second information further comprises routing information of the location management network element.

4. The method according to any one of claims 1 to 3, wherein
the terminal device is a device for which no non-access stratum NAS protocol is configured and/or no radio resource control RRC protocol is configured.

5. The method according to any one of claims 1 to 4, wherein
the fourth information comprises signal strength information of a radio wave signal used to carry the third information; or
the fourth information comprises information about a time at which the access network device receives the third information.

6. A positioning method, comprising:
receiving, by an access network device, second information from a location management network element, wherein the second information is used to establish a context of a terminal device, the second information comprises information about a second identifier corresponding to the terminal device, the second identifier is determined by the location management network element based on a first identifier corresponding to the terminal device, information about the first identifier is comprised in first information provided by an application entity, and the terminal device does not support a network access capability;
receiving, by the access network device, third information from the terminal device, wherein the third information comprises the information about the second identifier; and
sending, by the access network device, fourth information to the location management network element, wherein the fourth information is used to position the terminal device, and the fourth information is determined based on the third information.

7. The method according to claim 6, wherein
the second information further comprises routing information of the location management network element.

8. The method according to claim 6 or 7, wherein
the terminal device is a device for which no NAS protocol is configured and/or no RRC protocol is configured.

9. The method according to any one of claims 6 to 8, wherein
the fourth information comprises signal strength information of a radio wave signal used to carry the third information; or
the fourth information comprises information about a time at which the access network device receives the third information.

10. A positioning method, comprising: obtaining, by a terminal device, third information, wherein the third information comprises information about a second identifier corresponding to the terminal device; and
the second identifier corresponds to a second identifier in second information received by an access network device from a location management network element, the second identifier in the second information is determined by the location management network element based on a first identifier, information about the first identifier is comprised in first information provided by an application entity, and the terminal device does not support a network access capability; and
sending, by the terminal device, the third information.

11. The method according to claim 10, wherein the terminal device is a device for which no NAS protocol is configured and/or no RRC protocol is configured.

12. A positioning method, comprising:
obtaining, by a data storage management network element, first information, wherein the first information is provided by an application entity, the first information comprises information about a first identifier corresponding to a terminal device, and the terminal device does not support a network access capability; and
sending, by the data storage management network element, the first information to a first mobility management network element.

13. The method according to claim 12, wherein
the first information further comprises information about a first location of the terminal device, and the method further comprises:
selecting, by the data storage management network element, the first mobility management network element, wherein the first location is within a service area of the first mobility management network element.

14. The method according to claim 12 or 13, wherein the first information further comprises information about a positioning capability and information about a first parameter of the terminal device.

15. The method according to any one of claims 12 to 14, wherein the method further comprises:
sending, by the data storage management network element, a first request message to the application entity, wherein the first request message is used to request the application entity to send information about a second location when the second location of the terminal device is outside the service area of the first mobility management device;
receiving, by the data storage management network element, the information about the second location; and
selecting, by the data storage management network element, a second mobility management network element, wherein the second location is within a service area of the second mobility management network element.

16. The method according to any one of claims 12 to 15, wherein the terminal device is a device for which no NAS protocol is configured and/or no RRC protocol is configured.

17. A positioning method, comprising:
obtaining, by an application entity, first information, wherein the first information comprises information about a first identifier corresponding to a terminal device, and the terminal device does not support a network access capability; and
sending, by the application entity, the first information to a data storage management network element.

18. The method according to claim 17, wherein the first information further comprises information about a first location, information about a positioning capability, and information about a first parameter of the terminal device.

19. The method according to claim 17 or 18, wherein the method further comprises:
receiving, by the application entity, a first request message, wherein the first request message is used to request the application entity to send information about a second location when the second location of the terminal device is outside a service area of a first mobility management network element, and the first request message comprises information about the service area of the first mobility management network element;
determining, by the application entity, that the second location is outside the service area of the first mobility management network element; and
sending, by the application entity, the information about the second location, wherein the information about the second location is used to select a second mobility management network element, and the second location is within a service area of the second mobility management network element.

20. The method according to any one of claims 17 to 19, wherein the terminal device is a device for which no NAS protocol is configured and/or no RRC protocol is configured.

21. A positioning method, comprising:
receiving, by a mobility management network element, first information, wherein the first information is provided by an application entity, the first information comprises information about a first identifier corresponding to a terminal device, and the terminal device does not support a network access capability; and
sending, by the mobility management network element, the first information to a location management network element.

22. The method according to claim 21, wherein
the first information further comprises information about a first location, information about a positioning capability, and information about a first parameter of the terminal device, and the method further comprises:
selecting, by the mobility management network element, the location management network element based on the first location and the positioning capability.

23. The method according to claim 21 or 22, wherein the terminal device is a device for which no NAS protocol is configured and no RRC protocol is configured.

24. A location management network element, comprising:
a transceiver unit, configured to obtain first information, wherein the first information is provided by an application entity, the first information comprises information about a first identifier corresponding to a terminal device, and the terminal device does not support a network access capability;
the transceiver unit is further configured to send second information to an access network device, wherein the second information is used to establish a context of the terminal device, the second information comprises information about a second identifier corresponding to the terminal device, and the second identifier is determined based on the first identifier; and
the transceiver unit is further configured to receive fourth information sent by the access network device, wherein the fourth information is determined by the access network device based on third information sent by the terminal device, and the third information comprises the information about the second identifier; and
a processing unit, configured to determine a location of the terminal device based on the fourth information.

25. The network element according to claim 24, wherein
the fourth information comprises signal strength information of a radio wave signal used to carry the third information; or
the fourth information comprises information about a time at which the access network device receives the third information.

26. The network element according to claim 24 or 25, wherein
the first information further comprises information about a first location and information about a first parameter of the terminal device, and the first identifier and the first parameter are used to determine the second identifier; and
the processing unit is further configured to select the access network device, wherein the first location is within a service area of the access network device.

27. The network element according to any one of claims 24 to 26, wherein
the second information further comprises routing information of the location management network element.

28. An access network device, comprising:
a transceiver unit, configured to receive second information from a location management network element, wherein the second information is used to establish a context of a terminal device, the second information comprises information about a second identifier corresponding to the terminal device, the second identifier is determined by the location management network element based on a first identifier corresponding to the terminal device, information about the first identifier is comprised in first information provided by an application entity, and the terminal device does not support a network access capability;, wherein
the transceiver unit is further configured to receive third information from the terminal device, wherein the third information comprises the information about the second identifier; and
the transceiver unit is further configured to send fourth information to the location management network element, wherein the fourth information is used to position the terminal device, and the fourth information is determined based on the third information.

29. The access network device according to claim 28, wherein
the fourth information comprises signal strength information of a radio wave signal used to carry the third information; or
the fourth information comprises information about a time at which the access network device receives the third information.

30. The access network device according to claim 28 or 29, wherein
the second information further comprises routing information of the location management network element.

31. A terminal device, comprising:
a processing unit, configured to obtain third information, wherein the third information comprises information about a second identifier corresponding to the terminal device; and
the second identifier corresponds to a second identifier in second information received by an access network device from a location management network element, the second identifier in the second information is determined by the location management network element based on a first identifier, information about the first identifier is comprised in first information provided by an application entity, and the terminal device does not support a network access capability; and
a transceiver unit, configured to send the third information.

32. The terminal device according to claim 31, wherein the terminal device is a device for which no NAS protocol is configured and/or no RRC protocol is configured.

33. A data storage management network element, comprising:
a transceiver unit, configured to obtain first information, wherein the first information is provided by an application entity, the first information comprises information about a first identifier corresponding to a terminal device, and the terminal device does not support a network access capability; and
the transceiver unit is further configured to send the first information to a first mobility management network element.

34. The data storage management network element according to claim 33, wherein
the first information further comprises information about a first location of the terminal device, and the data storage management network element further comprises:
a processing unit, configured to select the first mobility management network element, wherein the first location is within a service area of the first mobility management network element.

35. The data storage management network element according to claim 33 or 34, wherein the first information further comprises information about a positioning capability and information about a first parameter of the terminal device.

36. The data storage management network element according to claim 34 or 35, wherein
the transceiver unit is further configured to send a first request message to the application entity, wherein the first request message is used to request the application entity to send information about a second location when the second location of the terminal device is outside the service area of the first mobility management device;
the transceiver unit is further configured to receive the information about the second location; and
the processing unit is further configured to select a second mobility management network element, wherein the second location is within a service area of the second mobility management network element.

37. An application entity, comprising:
a processing unit, configured to obtain first information, wherein the first information comprises information about a first identifier corresponding to a terminal device, and the terminal device does not support a network access capability; and
a transceiver unit, configured to send the first information to a data storage management network element.

38. The application entity according to claim 37, wherein the first information further comprises information about a first location, information about a positioning capability, and information about a first parameter of the terminal device.

39. The application entity according to claim 37 or 38, wherein
the transceiver unit is further configured to receive a first request message, wherein the first request message is used to request the application entity to send information about a second location when the second location of the terminal device is outside a service area of a first mobility management network element, and the first request message comprises information about the service area of the first mobility management network element;
the processing unit is further configured to determine that the second location is outside the service area of the first mobility management network element; and
the transceiver unit is further configured to send the information about the second location, wherein the information about the second location is used to select a second mobility management network element, and the second location is within a service area of the second mobility management network element.

40. A mobility management network element, comprising:
a transceiver unit, configured to receive first information, wherein the first information is provided by an application entity, the first information comprises information about a first identifier corresponding to a terminal device, and the terminal device does not support a network access capability; and
the transceiver unit is further configured to send the first information to a location management network element.

41. The mobility management network element according to claim 40, wherein
the first information further comprises information about a first location information about a positioning capability, and information about a first parameter of the terminal device, and the mobility management network element further comprises:
a processing unit, configured to select the location management network element based on the first location and the positioning capability.

42. A computer-readable storage medium, wherein the computer-readable storage medium stores a computer program, and when the computer program is run,
an apparatus is enabled to perform the method according to any one of claims 1 to 5; or
an apparatus is enabled to perform the method according to any one of claims 6 to 9; or
an apparatus is enabled to perform the method according to claim 10 or 11; or
an apparatus is enabled to perform the method according to any one of claims 12 to 16; or
an apparatus is enabled to perform the method according to any one of claims 17 to 20; or
an apparatus is enabled to perform the method according to any one of claims 21 to 23.

43. A computer program product, wherein the computer program product comprises computer program code, and when the computer program code is run by a computer,
the computer is enabled to perform the method according to any one of claims 1 to 5; or
the computer is enabled to perform the method according to any one of claims 6 to 9; or
the computer is enabled to perform the method according to claim 10 or 11; or
the computer is enabled to perform the method according to any one of claims 12 to 16; or
the computer is enabled to perform the method according to any one of claims 17 to 20; or
the computer is enabled to perform the method according to any one of claims 21 to 23.

44. A communication system, wherein the communication system comprises a core network netwrok element and an access network device, wherein
the core network netwrok element is configured to perform the method according to any one of claims 1 to 5; or
the core network netwrok element is configured to perform the method according to any one of claims 12 to 16; or
the core network netwrok element is configured to perform the method according to any one of claims 21 to 23; and
the access network device is configured to perform the method according to any one of claims 6 to 9.

45. A chip, wherein a processing circuit is disposed on the chip; and
the processing circuit is configured to perform the method according to any one of claims 1 to 5; or
the processing circuit is configured to perform the method according to any one of claims 6 to 9; or
the processing circuit is configured to perform the method according to claim 10 or 11; or
the processing circuit is configured to perform the method according to any one of claims 12 to 16; or
the processing circuit is configured to perform the method according to any one of claims 17 to 20; or
the processing circuit is configured to perform the method according to any one of claims 21 to 23.
